# EUROPÄISCHE PATENTANMELDUNG

(11) **EP 4 016 781 A1**
(43) Veröffentlichungstag der Anmeldung: **22.06.2022**
(21) Anmeldenummer: 20214320.2
(22) Anmeldetag: 15.12.2020
(51) Int. Cl.: H02J 7/00

(54) **LADEGERÄT UND LADEGERÄTGEHÄUSE MIT BEFESTIGUNGSBEREICH**

(71) Anmelder: Andreas Stihl AG & Co. KG, 71336 Waiblingen (DE)
(72) Erfinder: Fuchs, Michael, 71332 Waiblingen (DE); Hellmann, Charis, 70825 Korntal-Münchingen (DE)
(74) Vertreter: Patentanwälte Ruff, Wilhelm, Beier, Dauster & Partner mbB

(57) **Zusammenfassung**

2.1. Die Erfindung bezieht sich auf ein Ladegerätgehäuse, das eine Bedienseite (1) mit mindestens einem von der Bedienseite (1) her zugänglichen Batterieladeplatz (2) und einen gehäuseaußenseitigen ersten Befestigungsbereich (3) an einer von der Bedienseite (1) verschiedenen ersten Befestigungsseite (4) umfasst, wobei der erste Befestigungsbereich (3) zur lösbaren Befestigung des Ladegerätgehäuses an einer Befestigungsunterlage eingerichtet ist und eine oder mehrere erste Befestigungselemente (5) aufweist.
2.2. Erfindungsgemäß weist das Ladegerätgehäuse einen gehäuseaußenseitigen zweiten Befestigungsbereich (6) an einer von der Bedienseite (1) und der ersten Befestigungsseite (4) verschiedenen zweiten Befestigungsseite (7) auf, wobei der zweite Befestigungsbereich (6) zur lösbaren Befestigung des Ladegerätgehäuses an einer Befestigungsunterlage eingerichtet ist und eine oder mehrere zweite Befestigungselemente (8) aufweist.
2.3. Verwendung z.B. als Gehäuse eines Ladegerätes zum Aufladen von Akkupacks für elektrische Garten- und Forstbearbeitungsgeräte.

## Beschreibung

Die Erfindung bezieht sich auf ein Ladegerätgehäuse, das eine Bedienseite mit mindestens einem von der Bedienseite her zugänglichen Batterieladeplatz und einen gehäuseaußenseitigen ersten Befestigungsbereich an einer von der Bedienseite verschiedenen ersten Befestigungsseite umfasst, wobei der erste Befestigungsbereich zur lösbaren Befestigung des Ladegerätgehäuses an einer Befestigungsunterlage eingerichtet ist und ein oder mehrere erste Befestigungselemente aufweist, sowie auf ein mit einem solchen Ladegerätgehäuse ausgerüstetes Ladegerät.

Derartige Ladegerätgehäuse werden für Ladegeräte, genauer gesagt elektrische Ladegeräte, verwendet, die zum elektrischen Laden, i.e. elektrischen Aufladen, einer jeweiligen wiederaufladbaren elektrischen Batterieeinheit dienen. Dazu wird die betreffende Batterieeinheit von der Bedienseite des Ladegerätgehäuses her in den Batterieladeplatz eingebracht. Aus diesem kann sie dann wieder an der Bedienseite des Ladegerätgehäuses entnommen werden, insbesondere nach erfolgter Aufladung. Das Ladegerät kann als Einzelplatzladegerät, das einen einzigen Batterieladeplatz aufweist, oder als Mehrplatzladegerät ausgeführt sein, das über mehrere Batterieladeplätze verfügt. Der Begriff Batterieeinheit umfasst vorliegend einen elektrischen Energiespeicher jedweden herkömmlichen Batterietyps, insbesondere vom Typ sogenannter Akkupacks, wie sie zur elektrischen Energieversorgung beispielsweise von elektrisch betriebenen Garten- und Forstbearbeitungsgeräten sowie elektrisch betriebenen Heimwerkergeräten vielfach zum Einsatz kommen.

Über seinen ersten Befestigungsbereich, z.B. ein rückseitiger Befestigungsbereich bzw. eine rückseitige Befestigungsfläche, kann das Ladegerätgehäuse lösbar an einer z.B. flächigen Befestigungsunterlage befestigt werden, z.B. in Wandmontage an einer vertikal orientierten Wand eines Gebäudes oder eines Fahrzeuginnenraums oder dgl. oder boden-/tischmontiert an einer horizontal orientierten Boden- oder Tischfläche oder dgl. Dabei kann sich der erste Befestigungsbereich gegen einen korrespondierenden Bereich der Befestigungsunterlage anlegen, und die lösbare Befestigung erfolgt mittels des oder der zugehörigen Befestigungselemente. Bei diesen Befestigungselementen kann es sich seitens des Ladegerätgehäuses beispielsweise um Schraubbefestigungsöffnungen, Klettverschlusselemente, Magnetelemente, lösbare Klebverbindungselemente oder andere herkömmliche lösbare Befestigungselemente handeln.

Die Patentschrift GB 2497372 B offenbart ein modulares Ladegerät mit einem chassisartigen, quader- bzw. leistenförmigen Ladegerätgehäuse der eingangs genannten Art, das an einer als Bedienseite fungierenden Frontseite modular anbringbare Batterieaufnahmekörper aufweist, die jeweils einen Batterieladeplatz zum Aufnehmen und Laden einer passenden Batterieeinheit beinhalten. Rückseitig ist dieses Ladegerätgehäuse an seinen vier Eck- oder Seitenbereichen mit je einer Schrauböffnung als Rückbefestigungselemente versehen, wodurch es mittels zugehöriger Schrauben an einer vertikal orientierten Wand z.B. eines Montagerahmens eines Computeraufbaus oder über dazu passende Wandbefestigungsklammern an einer Gebäudewand oder ähnlichen Wand befestigt werden kann. Alternativ können an den gegenüberliegenden Schmalseiten dieses leistenförmigen Ladegerätgehäuses Standfußelemente montiert werden, mit denen das Gehäuse auf einer horizontalen Tischfläche oder dergleichen aufgestellt werden kann.

Der Erfindung liegt als technisches Problem die Bereitstellung eines Ladegerätgehäuses der eingangs genannten Art, das sich mit vergleichsweise geringem Aufwand realisieren lässt und gegenüber dem oben erwähnten Stand der Technik insbesondere hinsichtlich seiner Befestigungsmöglichkeiten und seiner sich daraus ergebenden Gebrauchsvariabilität verbessert ist, und eines damit ausgerüsteten Ladegerätes zugrunde.

Die Erfindung löst dieses Problem durch die Bereitstellung eines Ladegerätgehäuses mit den Merkmalen des Anspruchs 1 und eines Ladegerätes mit den Merkmalen des Anspruchs 11. Vorteilhafte Weiterbildungen der Erfindung, die zur Lösung dieses und weiterer Probleme beitragen, sind in den Unteransprüchen angegeben, deren Inhalt einschließlich sämtlicher sich durch die Anspruchsrückbezüge ergebender Merkmalskombinationen hiermit vollumfänglich durch Verweis zum Inhalt der Beschreibung gemacht wird.

Das erfindungsgemäße Ladegerätgehäuse beinhaltet zusätzlich zu seinem gehäuseaußenseitigen ersten Befestigungsbereich einen gehäuseaußenseitigen zweiten Befestigungsbereich an einer von der Bedienseite und der ersten Befestigungsseite verschiedenen zweiten Befestigungsseite, wobei der zweite Befestigungsbereich zur lösbaren Befestigung des Ladegerätgehäuses an einer Befestigungsunterlage eingerichtet ist und ein oder mehrere Seitenbefestigungselemente aufweist.

Dies ermöglicht für das erfindungsgemäße Ladegerätgehäuse wahlweise eine Befestigung über den ersten Befestigungsbereich oder eine Befestigung über den zweiten Befestigungsbereich an einer jeweiligen, z.B. flächigen Befestigungsunterlage, wie einer vertikal orientierten Wandfläche oder einer horizontal orientierten Tischfläche oder einer andersartigen, vertikal oder horizontal oder beliebig anders im Raum orientierten Unterlage, die eben, gekrümmt und/oder profiliert, d.h. beispielsweise mit Befestigungsvorsprüngen oder Befestigungsausnehmungen versehen, sein kann. Der jeweilige erste bzw. zweite Befestigungsbereich kann ein einziger Bereich, d.h. ein Gebiet im mathematischen Sinn, mit eher punktueller oder eher flächiger Ausdehnung oder ein mehrteiliger, aus der Gesamtheit mehrerer solcher, voneinander separierter Teilbereiche bestehender Bereich sein. Dies schließt die Möglichkeit ein, dass der jeweilige Befestigungsbereich von einem oder mehreren punktuellen oder flächigen Befestigungsvorsprüngen gebildet ist, der bzw. die gegenüber einem restlichen Teil der betreffenden Befestigungsseite vorstehen.

Dadurch bietet das erfindungsgemäße Ladegerätgehäuse mit relativ geringem Aufwand in flexibler Weise variable lösbare Befestigungsmöglichkeiten, was seine Gebrauchsvariabilität im Gebrauch und speziell seine flexible Positionierbarkeit für den Ladebetrieb des zugehörigen Ladegerätes erhöht. Für die zweiten Befestigungselemente sind wie für die ersten Befestigungselemente seitens des Ladegerätgehäuses beispielsweise Schraubbefestigungsöffnungen, Klettverschlusselemente, Magnetelemente, lösbare Klebverbindungselemente bzw. Klebverbindungsflächen oder andere herkömmliche lösbare Befestigungselemente verwendbar. Es versteht sich, dass die zugeordnete Befestigungsunterlage dazu korrespondierende Befestigungselemente aufweist, die mit denen des Ladegerätgehäuses lösbar verbindende zusammenwirken, wie entsprechende Schraubbolzen, Klettverschlusselemente, Magnetelemente oder lösbare Klebverbindungselemente bzw. -flächen.

Das erfindungsgemäße Ladegerät weist ein derartiges, erfindungsgemäßes Ladegerätgehäuse auf.

In einer Weiterbildung der Erfindung umfasst der erste Befestigungsbereich mehrere separate, z.B. eher flächige oder alternativ eher punktuelle, erste Befestigungszonen, die in einer gemeinsamen ersten Befestigungsebene liegen. Dies ist z.B. für eine Befestigung des Ladegerätgehäuses an einer Befestigungsunterlage von Vorteil, die über korrespondierende, ebenfalls in einer gemeinsamen Ebene liegende Befestigungszonen verfügt. Über die in einer gemeinsamen Ebene liegenden ersten Befestigungszonen kann sich das Ladegerätgehäuse an entsprechend mehreren, voneinander beabstandeten Zonen gegen eine solche Befestigungsunterlage anlegen, so dass das Ladegerätgehäuse mit guter Abstützung an der jeweiligen Befestigungsunterlage gehalten werden kann. Alternativ kann der erste Befestigungsbereich von einem einzigen ebenen Flächenbereich, z.B. einer Rückfläche, oder von mehreren separaten, z.B. flächigen oder punktuellen, ersten Befestigungszonen gebildet sein, die in zwei oder mehr unterschiedlichen Ebenen liegen.

In einer Weiterbildung der Erfindung umfasst der erste Befestigungsbereich mehrere separate, z.B. flächige oder punktuelle, Befestigungszonen, die jeweils mindestens eine erste Schraubbefestigungsöffnung als erstes Befestigungselement aufweisen. Dies stellt eine konstruktiv einfache und hinsichtlich Befestigungsstabilität günstige Realisierung dar. In alternativen Ausführungen kann die erste Befestigungsseite z.B. eine einzige plane Fläche als ersten Befestigungsbereich bereitstellen, und/oder es können andere erste Befestigungselemente verwendet sein, z.B. Klettbänder oder Magnetelemente.

In einer Ausgestaltung der Erfindung besitzt die erste Befestigungsseite eine polygonale Form, und die ersten Befestigungszonen befinden sich an Eck- oder Seitenbereichen der ersten Befestigungsseite. Damit liegen die ersten Befestigungszonen des Ladegerätgehäuses, an denen sich zugehörige erste Befestigungspunkte befinden, relativ weit auseinander, was der Stabilität der Befestigung des Ladegerätgehäuses an der Befestigungsunterlage zugute kommt. In alternativen Ausführungen kann die erste Befestigungsseite z.B. von kreisrunder oder ovaler Form sein, und im Fall mehrerer separater erster Befestigungszonen sind diese vorzugsweise mit relativ großen gegenseitigen Abständen angeordnet.

In einer Weiterbildung der Erfindung umfasst der zweite Befestigungsbereich mehrere separate, z.B. flächige oder punktuelle, zweite Befestigungszonen, die in einer gemeinsamen zweiten Befestigungsebene liegen. Wiederum kann sich das Ladegerätgehäuse in diesem Fall über die in einer gemeinsamen Ebene liegenden zweiten Befestigungszonen an entsprechend mehreren, voneinander beabstandeten Zonen gegen eine zugeordnete Befestigungsunterlage anlegen, so dass das Ladegerätgehäuse mit guter Abstützung an dieser Befestigungsunterlage gehalten werden kann. Alternativ kann der zweite Befestigungsbereich von einer einzigen ebenen Fläche, z.B. einer planen Seitenfläche, oder von mehreren separaten, z.B. flächigen oder punktuellen, zweiten Befestigungszonen gebildet sein, die in zwei oder mehr unterschiedlichen Ebenen liegen.

In einer Weiterbildung der Erfindung umfasst der zweite Befestigungsbereich mehrere separate, z.B. flächige oder punktuelle Befestigungszonen, die jeweils mindestens eine zweite Schraubbefestigungsöffnung als zweites Befestigungselement aufweisen. Dies stellt wiederum eine konstruktiv einfache und hinsichtlich Befestigungsstabilität günstige Realisierung dar. In alternativen Ausführungen kann die betreffende Gehäuseseite z.B. eine einzige plane Fläche als Befestigungsfläche bereitstellen, und/oder es können andere zweite Befestigungselemente verwendet sein, z.B. Klettbänder oder Magnetelemente.

In einer Ausgestaltung der Erfindung besitzt die zweite Befestigungsseite eine polygonale Form, und die z.B. flächigen oder punktuellen zweiten Befestigungszonen befinden sich an Eck- oder Seitenbereichen der zweiten Befestigungsseite. Damit liegen die Bereiche des Ladegerätgehäuses, an denen sich zugehörige zweite Befestigungspunkte befinden, relativ weit auseinander, was der Stabilität dieser Befestigung des Ladegerätgehäuses an der betreffenden Befestigungsunterlage zugute kommt. In alternativen Ausführungen kann die betreffende Gehäuseseite z.B. von kreisrunder oder ovaler Form sein, und im Fall mehrerer separater zweiter Befestigungszonen sind diese vorzugsweise mit relativ großen gegenseitigen Abständen angeordnet.

In einer Weiterbildung der Erfindung weist das Ladegerätgehäuse außenseitige Befestigungsstützen auf, die jeweils an einer ersten Stützenseite das oder die ersten Befestigungselemente und an einer zweiten Stützenseite das oder die zweiten Befestigungselemente aufweisen. Dies stellt eine hinsichtlich geringem Fertigungsaufwand und guter Gehäusestabilität vorteilhafte Ausführung des Ladegerätgehäuses dar. Die Befestigungsstützen fungieren als Befestigungskomponenten des Gehäuses und können zudem zur Gehäusestabilität beitragen. Sie können einteilig mit dem übrigen Gehäuse gebildet oder separat vorgefertigt und an diesem montiert werden. Alternativ kann das Ladegerätgehäuse z.B. direkt über stützenfreie Gehäuseaußenwandbereiche an einer jeweiligen Befestigungsunterlage befestigt werden.

In einer Ausgestaltung der Erfindung weist die jeweilige außenseitige Befestigungsstütze einen die erste Stützenseite bildenden Stützenfußbereich und einen die zweite Stützenseite bildenden Stützenseitenbereich auf. In diesem Fall kann das Ladegerätgehäuse wahlweise über den Stützenfußbereich der jeweiligen Befestigungsstütze mit seiner erster Befestigungsseite an einer Befestigungsunterlage und über den Stützenlängsseitenbereich der jeweiligen Befestigungsstütze mit seiner zweiten Befestigungsseite an einer Befestigungsunterlage festgelegt werden. In alternativen Ausführungen können die beiden Stützenseiten der jeweiligen Befestigungsstütze, welche das oder die ersten bzw. das oder die zweiten Befestigungselemente aufweisen, z.B. von zwei aneinandergrenzenden Stützenlängsseitenbereichen gebildet sein.

In einer Ausgestaltung der Erfindung weist die jeweilige außenseitige Befestigungsstütze an der ersten Stützenseite mindestens zwei voneinander beabstandete erste Befestigungselemente und/oder an der zweiten Stützenseite mindestens zwei voneinander beabstandete zweite Befestigungselemente auf. Dies ermöglicht jeweils eine stabile Mehrpunktbefestigung des Ladegerätgehäuses an der Befestigungsunterlage über die Befestigungsstützen. Alternativ besitzt die jeweilige Befestigungsstütze z.B. nur ein einziges erstes oder zweites Befestigungselement an seiner betreffenden Stützenseite.

In einer weiteren Ausgestaltung der Erfindung weist die zweite Befestigungszone der jeweiligen Befestigungsstütze mindestens zwei voneinander beabstandet angeordnete zweite Befestigungselemente auf. Dies trägt zu einer guten Stabilität und Festigkeit dieser Befestigung des Ladegerätgehäuses an einer betreffenden Befestigungsunterlage bei.

In einer Weiterbildung der Erfindung bildet das Ladegerätgehäuse einen Gehäusequader, und die Bedienseite ist von einer Quaderhauptseite, d.h. einer Quaderseite größter Flächenausdehnung, oder einer Quaderlängsseite, d.h. einer Quaderseite zwischen den beiden Quaderhauptseiten, des Gehäusequaders gebildet. Dies stellt eine für viele Anwendungen günstige Form und Bedienfunktionalität für das Ladegerätgehäuse dar. Alternativ besitzt das Ladegerätgehäuse eine andere geometrische Außenkontur, z.B. eine im Querschnitt dreieckige Form oder eine Pyramidenform.

In einer Ausgestaltung der Erfindung sind die außenseitigen Befestigungsstützen an Quaderseitenkanten des Gehäusequaders angeordnet. Dies trägt zu einer Optimierung der wahlweisen Fixierung des quaderförmigen Ladegerätgehäuses an der jeweiligen Unterlage an der ersten oder der zweiten Befestigungsseite bei, wenn diese beiden Befestigungsseiten an den betreffenden Quaderseitenkanten aneinandergrenzen. Alternativ können die außenseitigen Befestigungsstützen z.B. an Mittenbereichen entsprechender Quaderseiten des Ladegerätgehäuses angeordnet sein.

Vorteilhafte Ausführungsformen der Erfindung sind in den Zeichnungen dargestellt. Diese und weitere Ausführungsformen der Erfindung werden nachfolgend näher erläutert. Hierbei zeigen:
- Fig. 1: eine Perspektivansicht eines Ladegeräts schräg von vorn oben mit einem La-degerätgehäuse mit frontseitiger Bedienseite,
- Fig. 2: eine Perspektivansicht des Ladegeräts schräg von seitlich hinten,
- Fig. 3: eine Perspektivansicht des Ladegeräts schräg von seitlich unten,
- Fig. 4: eine schematische Seitenansicht des Ladegerätes mit dem Gehäuse rückseitig fixiert an einer vertikalen Unterlage,
- Fig. 5: eine schematische Seitenansicht des Ladegerätes mit dem Gehäuse rückseitig fixiert an einer horizontalen Unterlage,
- Fig. 6: eine schematische Seitenansicht des Ladegerätes mit dem Gehäuse unterseitig fixiert an einer horizontalen Unterlage,
- Fig. 7: eine schematische Seitenansicht des Ladegerätes mit dem Gehäuse unterseitig fixiert an einer vertikalen Unterlage,
- Fig. 8: eine Perspektivansicht eines anderen Ladegeräts schräg von seitlich hinten mit einem Ladegerätgehäuse mit oberseitiger Bedienseite,
- Fig. 9: eine Perspektivansicht des Ladegerätes von Fig. 8 schräg von vorn oben mit dem Gehäuse rückseitig fixiert an einer vertikalen Unterlage,
- Fig. 10: eine Perspektivansicht des Ladegerätes von Fig. 8 schräg von vorn oben mit dem Gehäuse rückseitig fixiert an einer horizontalen Unterlage,
- Fig. 11: eine Perspektivansicht des Ladegerätes von Fig. 8 schräg von vorn oben mit dem Gehäuse seitlich fixiert an einer horizontalen Unterlage,
- Fig. 12: eine Perspektivansicht des Ladegerätes von Fig. 8 schräg von vorn oben mit dem Gehäuse seitlich fixiert an einer vertikalen Unterlage und
- Fig. 13: eine Detailschnittansicht eines Bereichs XIII von Fig. 10.

Das erfindungsgemäße Ladegerät, wie es in zwei beispielhaften Realisierungen gezeigt ist, dient in an sich bekannter Weise zum elektrischen Laden einer wiederaufladbaren Batterieeinheit, wobei es sich bei der Batterieeinheit insbesondere um einen Akkupack zur elektrischen Energieversorgung eines elektrisch betriebenen Garten- und Forstbearbeitungsgeräts oder eines elektrisch betriebenen Heimwerkergeräts handeln kann.

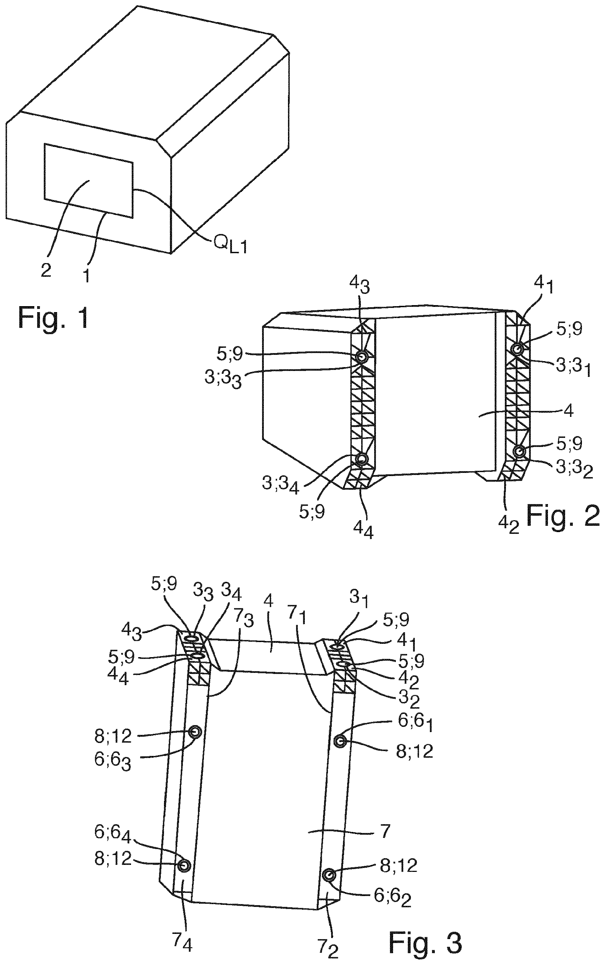

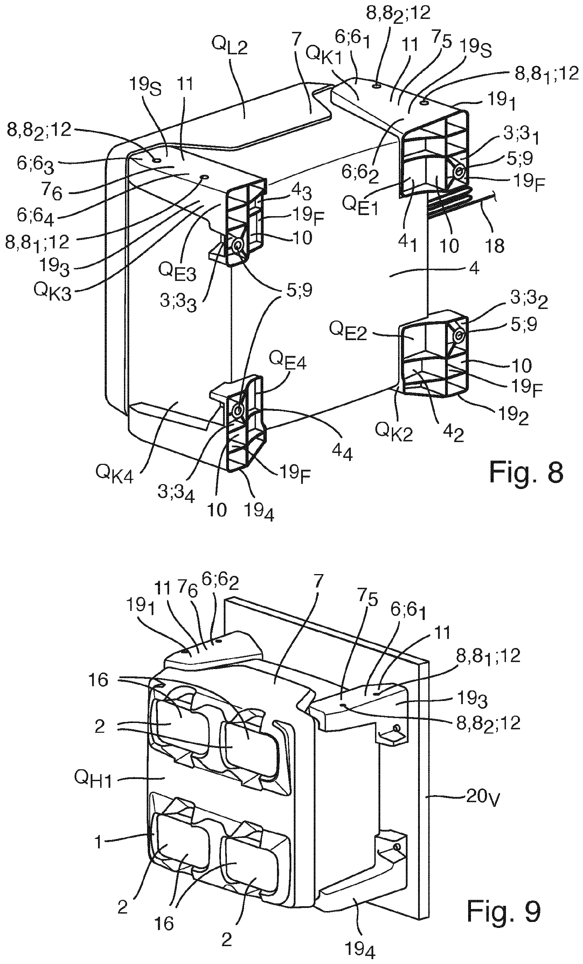

Das Ladegerät beinhaltet ein Ladegerätgehäuse mit einer Bedienseite 1 und mindestens einem von der Bedienseite 1 her zugänglichen Batterieladeplatz 2. Im Beispiel der Fig. 8 bis 13 besitzt das Ladegerätgehäuse vier Batterieladeplätze 2, in denen jeweils ein wiederaufladbarer Akkupack 16 zum elektrischen Laden durch das Ladegerät aufgenommen werden kann. Über ein Netzkabel 18 kann das Ladegerät an eine elektrische Stromversorgung angeschlossen werden. Im Beispiel der Fig. 1 bis 7 besitzt das Ladegerätgehäuse nur einen einzigen Batterieladeplatz 2, in dem ein einzelner wiederaufladbarer Ackupack 16 zum elektrischen Laden durch das Ladegerät aufgenommen werden kann. Im Folgenden wird o.B.d.A. die Bedienseite 1 auch Frontseite oder Oberseite des Ladegerätgehäuses und entsprechend die entgegengesetzte Seite des Ladegerätgehäuses als Rückseite oder Unterseite bezeichnet.

Das Ladegerätgehäuse weist einen gehäuseaußenseitigen ersten Befestigungsbereich 3 an einer von der Bedienseite 1 verschiedenen ersten Befestigungsseite 4 auf, wobei der erste Befestigungsbereich 3 zur lösbaren Befestigung des Ladegerätgehäuses an einer Befestigungsunterlage eingerichtet ist und ein oder mehrere erste Befestigungselemente 5 aufweist. Des Weiteren beinhaltet das Ladegerätgehäuse einen gehäuseaußenseitigen zweiten Befestigungsbereich 6 an einer von der Bedienseite 1 und der ersten Befestigungsseite 4 verschiedenen zweiten Befestigungsseite 7, wobei der zweite Befestigungsbereich 6 ebenfalls zur lösbaren Befestigung des Ladegerätgehäuses an einer Befestigungsunterlage eingerichtet ist und ein oder mehrere zweite Befestigungselemente 8 aufweist. In beiden gezeigten Gehäusekonfigurationen gemäß den Fig. 1 bis 7 bzw. den Fig. 8 bis 13 ist die erste Befestigungsseite 4 eine der Bedienseite 1 entgegengesetzte Gehäuseseite, und die zweite Befestigungsseite 7 ist eine zwischen der Bedienseite 1 und der ersten Befestigungsseite 4 verlaufende Gehäuseseite. In anderen Ausführungen kann es umgekehrt sein, oder beide Befestigungsseiten 4, 7 sind zwischen der Bedienseite 1 und der dieser entgegengesetzten Seite verlaufende Gehäuseseiten.

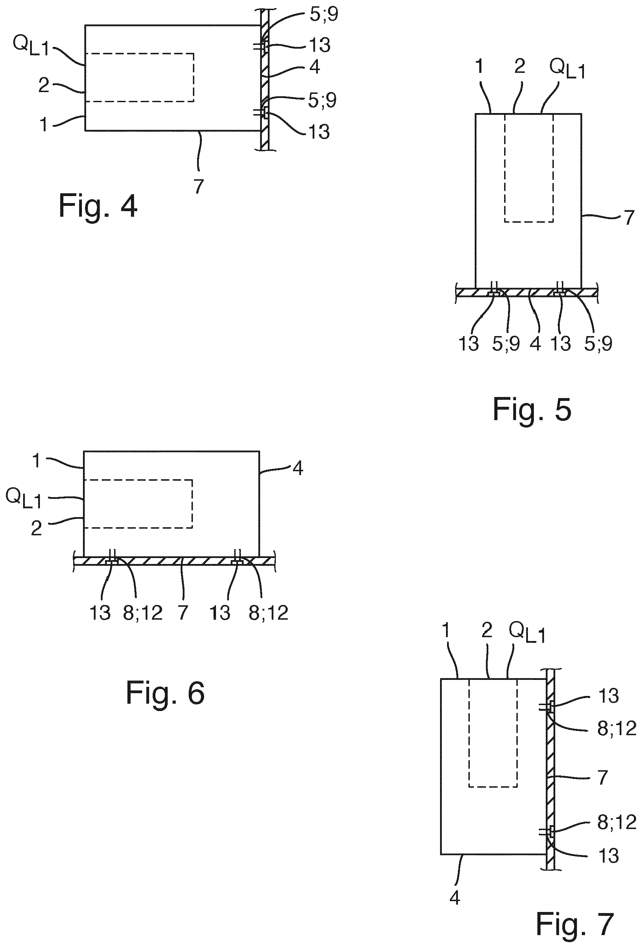

Aufgrund dieser Eigenschaften kann das Ladegerätgehäuse sehr variabel entweder an seiner ersten Befestigungsseite 4 oder an seiner zweiten Befestigungsseite 7 an einer beliebig im Raum orientierten Unterlage befestigt werden. Speziell veranschaulicht das Ausführungsbeispiel der Fig. 4 bis 7 die wahlweise Befestigung des Ladegeräts mit seinem Ladegerätgehäuse rückseitig, d.h. mit seiner Rückseite, an einer vertikalen Unterlage 20v, siehe Fig. 4, oder rückseitig an einer horizontalen Unterlage 20_{H}, siehe Fig. 5, oder seitlich, d.h. mit einer der Frontseite bzw. Bedienseite 1 benachbarten Gehäuseseite, an der horizontalen Unterlage 20_{H}, siehe Fig. 6, oder seitlich an der vertikalen Unterlage 20v, wobei die frontseitige Bedienseite 1 in den Befestigungspositionen des Gehäuses gemäß den Fig. 4 und 6 nach vorn und in den Befestigungspositionen des Gehäuses gemäß den Fig. 5 und 7 nach oben weist. In jeder dieser Befestigungspositionen des Ladegerätgehäuses ist die Bedienseite 1 für den Benutzer zum Einfügen eines aufzuladenden Akkupacks 16 in den Batterieladeplatz 2 und zum Herausnehmen des Akkupacks 16 aus selbigem nach erfolgtem Aufladevorgang gut zugänglich.

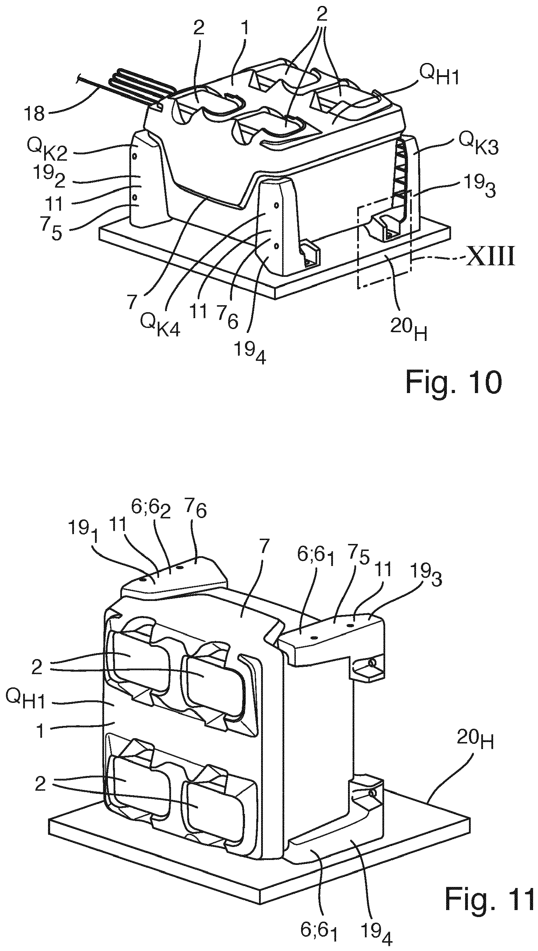

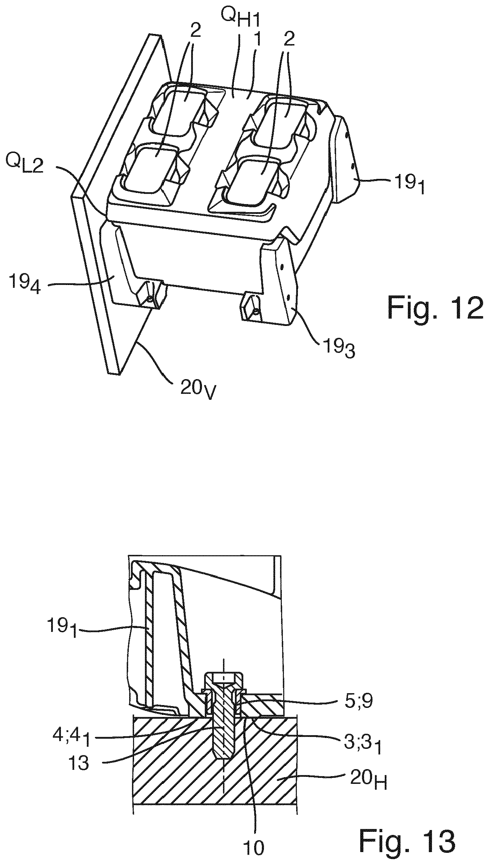

Analoges gilt für die Ausführung des Ladegerätgerätes gemäß den Fig. 8 bis 13. Fig. 9 veranschaulicht die Befestigung dieses Ladegerätes mit seinem Ladegerätgehäuse über dessen Unterseite bzw. Rückseite als erster Befestigungsseite 4 an der hier wiederum vertikal orientierten Unterlage 20v. Fig. 10 veranschaulicht die rückseitige Befestigung des Ladegerätgehäuses an der hier wiederum horizontalen Unterlage 20_{H}. Fig. 11 veranschaulicht eine seitliche Befestigung des Ladegerätgehäuses an der horizontalen Unterlage 20_{H}, und Fig. 12 veranschaulicht die seitliche Befestigung des Ladegerätgehäuses an der vertikalen Unterlage 20v. In den Befestigungspositionen der Fig. 9 und 11 weist das Ladegerätgehäuse mit seiner Bedienseite 1 nach vorn, in den Befestigungspositionen der Fig. 10 und 12 weist es mit seiner Befestigungsseite 1 nach oben. Auch hier ist in jeder dieser Befestigungspositionen die Bedienseite 1 zum Einfügen und Entnehmen der Akkupacks 16 in die bzw. aus den Batterieladeplätzen 2 für den Benutzer problemlos und gut zugänglich.

Da die Befestigung des Ladegerätgehäuses sowohl an seiner ersten Befestigungsseite 4 als auch an seiner zweiten Befestigungsseite 7 jeweils lösbar ausgeführt ist, kann das Ladegerätgehäuse jeweils wieder von einer Befestigungsunterlage abgenommen und in anderer Orientierung an der gleichen Unterlage oder in gleicher oder anderer Orientierung an einer anderen Unterlage wieder befestigt werden, wodurch sich das Ladegerät für den Betrieb sehr flexibel und sicher an einer jeweiligen Unterlage gehalten positionieren lässt.

In entsprechenden Ausführungsformen beinhaltet der erste Befestigungsbereich 3 mehrere separate erste Befestigungszonen, die in einer gemeinsamen ersten Befestigungsebene liegen, in den gezeigten Beispielen jeweils vier separate erste Befestigungszonen 3₁, 3₂, 3₃, 3₄, in alternativen Realisierungen nur zwei oder drei oder mehr als vier Befestigungszonen. Die Befestigungszonen 3₁ bis 3₄ können je nach Bedarf eher punktueller oder eher flächiger Art sein. Da sie in einer gemeinsamen Ebene liegen, sind sie besonders gut daran angepasst, das Ladegerätgehäuse an einer entsprechend planen Unterlage zu befestigen.

In entsprechenden Ausführungen umfasst der erste Befestigungsbereich 3 mehrere separate erste Befestigungszonen, die jeweils mindestens eine erste Schraubbefestigungsöffnung 9 als erstes Befestigungselement 5 aufweisen, wie dies in den gezeigten Bespielen für die ersten Befestigungszonen 3₁ bis 3₄ der Fall ist. Mit der ersten Schraubbefestigungsöffnung 9 kann insbesondere ein jeweiliger Schraubbolzen 13 zusammenwirken, wie z.B. in den Fig. 4, 5 und 13 zu erkennen, um das Ladegerätgehäuse in der betreffenden ersten Befestigungszone 3₁ bis 3₄ an der zugeordneten Unterlage mittels einer entsprechenden Schraubverbindung lösbar festzulegen. In alternativen Realisierungen kann als erstes Befestigungselement 5 in der jeweiligen ersten Befestigungszone 3₁ bis 3₄ z.B. ein Magnetelement oder ein Klettbandelement vorgesehen sein.

In entsprechenden Ausführungsformen besitzt die erste Befestigungsseite 4 eine polygonale Form, und die ersten Befestigungszonen befinden sich an Eck- oder Seitenbereichen der ersten Befestigungsseite 4. In den gezeigten Beispielen hat die erste Befestigungsseite 4 eine viereckige, speziell rechteckige, Form, und die ersten Befestigungszonen 3₁ bis 3₄ befinden sich an Eck- bzw. Seitenbereichen 4₁, 4₂, 4₃, 4₄ dieser rechteckigen ersten Befestigungsseite 4. Dadurch sind die ersten Befestigungszonen 3₁ bis 3₄ mit relativ großen Abständen voneinander über die erste Befestigungsseite 4 hinweg verteilt angeordnet, was die Stabilität der Befestigung des Ladegerätgehäuses an der Unterlage fördert.

In entsprechenden Realisierungen umfasst der zweite Befestigungsbereich 6 mehrere separate zweite Befestigungszonen, die in einer gemeinsamen zweiten Befestigungsebene liegen. In den gezeigten Beispielen umfasst der zweite Befestigungsbereich 6 jeweils vier separate zweite Befestigungszonen 6₁, 6₂, 6₃, 6₄. Indem diese in der gemeinsamen zweiten Befestigungsebene liegen, ermöglicht dies wiederum eine problemlose Befestigung des Ladegerätgehäuses über seine zweite Befestigungsseite 7 an einer planen Unterlage. In alternativen Ausführungen beinhaltet der zweite Befestigungsbereich 6 zwei, drei oder mehr als vier zweite Befestigungszonen. Die Befestigungszonen 6₁ bis 6₄ können wiederum jeweils je nach Bedarf von eher punktueller oder eher flächiger Form sein.

In entsprechenden Ausführungen umfasst der zweite Befestigungsbereich 6 mehrere separate zweite Befestigungszonen, die jeweils mindestens eine zweite Schraubbefestigungsöffnung 12 als zweites Befestigungselement 8 aufweisen, wie dies in den gezeigten Beispielen für die jeweils vier zweiten Befestigungszonen 6₁ bis 6₄ der Fall ist. Mit der Schraubbefestigungsöffnung 12 kann wiederum z.B. ein jeweiliger Schraubbolzen 13 zusammenwirken, wie z.B. in den Fig. 6 und 7 zu erkennen, um das Ladegerätgehäuse in der betreffenden zweiten Befestigungszone 6₁ bis 6₄ mit seiner zweiten Befestigungsseite 7 durch eine lösbare Schraubverbindung an einer Unterlage zu befestigen. In alternativen Ausführungen ist als zweites Befestigungselement 8 z.B. ein Magnetelement oder ein Klettbandelement vorgesehen.

In entsprechenden Ausführungsformen besitzt die zweite Befestigungsseite 7 eine polygonale Form, in den gezeigten Beispielen speziell eine viereckige bzw. rechteckige Form, und die zweiten Befestigungszonen 6₁ bis 6₄ befinden sich an Eck- oder Seitenbereichen der zweiten Befestigungsseite 7, im Beispiel der Fig. 1 bis 7 an vier Eckbereichen 7₁, 7₂, 7₃, 7₄ und im Beispiel der Fig. 8 bis 13 an zwei Seitenbereichen 7₅, 7₆. Damit lässt sich eine stabile Befestigung des Ladegerätgehäuses mit seiner zweiten Befestigungsseite 7 an einer Unterlage als entsprechende Mehrpunktbefestigung an relativ weit voneinander beabstandeten Befestigungsstellen erzielen.

In vorteilhaften Ausführungen beinhaltet das Ladegerätgehäuse, wie im Ausführungsbeispiel der Fig. 8 bis 13, außenseitige Befestigungsstützen 19₁, 19₂, 19₃, 19₄, die jeweils an einer ersten Stützenseite 10 das oder die ersten Befestigungselemente 5 und an einer zweiten Stützenseite 11 das oder die zweiten Befestigungselemente 8 aufweisen. Dadurch übernehmen die Befestigungsstützen 19₁ bis 19₄ die Befestigungsfunktion für das Ladegerätgehäuse und können dafür speziell ausgelegt werden, so dass die Auslegung des Ladegerätgehäuses im Übrigen unabhängig von dieser Befestigungsfunktion gehalten werden kann. Die Befestigungsstützen 19₁, 19₂, 19₃, 19₄ können einteilig, oder wie im gezeigten Beispiel, separat vom übrigen Gehäuse vorgefertigt und mit diesem lösbar oder unlösbar, d.h. nicht zerstörungsfrei lösbar, verbunden sein.

In vorteilhaften Ausführungsformen weist die jeweilige außenseitige Befestigungsstütze 19₁ bis 19₄, wie im gezeigten Beispiel der Fig. 8 bis 13, einen die erste Stützenseite 10 bildenden Stützenfußbereich 19_{F} und eine die zweite Stützenseite 11 bildenden Stützenlängsseitenbereich 19_{S} auf. Dies stellt eine funktionell günstige Realisierung der Befestigungsstützen 19₁ bis 19₄ dar. Das Ladegerätgehäuse kann damit wahlweise über die vier Fußbereiche 19_{F} der Befestigungsstützen 19₁ bis 19₄ mit seiner ersten Befestigungsseite 4 oder über die Längsseitenbereiche 19s von zwei der Befestigungsstützen 19₁ bis 19₄ mit seiner zweiten Befestigungsseite 7 lösbar an einer jeweiligen Unterlage fixiert werden, wobei in diesem Fall die beiden Befestigungsseiten 4, 7 zwei aneinandergrenzende bzw. benachbarte Gehäuseseiten sind, da es sich typischerweise bei dem Stützenfußbereich 19_{F} und dem Stützenlängsseitenbereich 19s der Befestigungsstützen 19₁ bis 19₄ um entsprechend benachbarte bzw. aneinander angrenzende Flächenbereiche der Befestigungsstützen 19₁ bis 19₄ handelt. Die Befestigungsstützen 19₁ bis 19₄ weisen dabei an ihrem Stützenlängsseitenbereich 19s jeweils zwei der Befestigungszonen 6₁ bis 6₄ auf. Bei Bedarf kann das Ladegerätgehäuse mit diesen Befestigungsstützen 19₁ bis 19₄ wahlweise auch an einer seiner anderen Gehäuselängsseiten als einer dritten Befestigungsseite zwischen seiner Bedienseite 1 und seiner ersten Befestigungsseite 3 an einer Unterlage befestigt werden.

In entsprechenden Ausführungen weist die jeweilige außenseitige Befestigungsstütze 19₁ bis 19₄ an ihrer ersten Stützenseite 10 mindestens zwei voneinander beabstandete erste Befestigungselemente und/oder an ihrer zweiten Stützenseite 11 mindestens zwei voneinander beabstandete zweite Befestigungselemente auf. Im gezeigten Beispiel der Fig. 8 bis 13 beinhaltet jede Befestigungsstütze 19₁ bis 19₄ an ihrer ersten Stützenseite 10 und an ihrer zweiten Stützenseite 11 jeweils mehrere, z.B. zwei, erste Befestigungselemente 5₁, 5₂ bzw. zweite Befestigungselemente 8₁, 8₂. In alternativen Realisierungen befinden sich mehr als zwei erste Befestigungselemente und/oder mehr als zwei zweite Befestigungselemente an der ersten bzw. der zweiten Stützenseite 10, 11.

In vorteilhaften Ausführungsformen bildet das Ladegerätgehäuse, wie in den gezeigten Beispielen, einen Gehäusequader, und die Bedienseite 1 ist von einer Quaderhauptseite Q_{H1}, wie im Beispiel der Fig. 8 bis 13, oder von einer Quaderlängsseite Q_{L1} des Gehäusequaders, wie im Beispiel der Fig. 1 bis 7, gebildet. Diese Quaderform des Ladegerätgehäuses ist für viele Ladegerätanwendungen optimal, sowohl hinsichtlich der Platzierung aufzuladender Batterieeinheiten als auch hinsichtlich der variablen lösbaren Befestigung des Ladegerätgehäuses an beliebigen Unterlagen mit beliebiger räumlicher Orientierung der jeweiligen Befestigungsunterlage und damit des daran lösbar fixierten Ladegerätgehäuses.

In vorteilhaften Realisierungen sind bei einem dergestalt quaderförmig gebildeten Ladegerätgehäuse mit außenseitigen Befestigungsstützen, wie beim Ausführungsbeispiel der Fig. 8 bis 13, die außenseitigen Befestigungsstützen 19₁ bis 19₄ an Quaderseitenkanten Q_{K1}, Q_{K2}, Q_{K3}, Qₖ₄ und/oder an Quadereckbereichen Q_{E1}, Q_{E2}, Q_{E3}, Q_{E4} des Gehäusequaders angeordnet. Speziell erstrecken sich im gezeigten Beispiel der Fig. 8 bis 13 die Befestigungsstützen 19₁ bis 19₄ jeweils sowohl entlang einer Quaderseitenkante Q_{K1} bis Q_{K4} als auch in einem angrenzenden Quadereckbereich Q_{E1} bis Q_{E4}. Damit kann das Ladegerätgehäuse in dieser Realisierung wahlweise je nach Bedarf mit seiner Rück- bzw. Unterseite als der ersten Befestigungsseite 4 über die Stützenfußbereiche 19_{F} der Befestigungsstützen 19₁ bis 19₄ oder mit einer Quaderlängsseite Q_{L2} als seiner zweiten Befestigungsseite 7 über die Stützenlängsseitenbereiche 19s der Befestigungsstützen 19₁ bis 19₄ lösbar an einer beliebig horizontal, vertikal oder andersartig im Raum orientierten Unterlage festgelegt werden.

In alternativen Ausführungen besitzt das Ladegerätgehäuse keine Quaderform, sondern z.B. eine Pyramidenform oder eine anderweitige Polyederform oder eine Gehäuseform, bei der eine oder mehrere Gehäuseseiten gewölbt bzw. gekrümmt, z.B. kugelschalenförmig, verlaufen.

In entsprechenden Realisierungen stehen die außenseitigen Befestigungsstützen nach hinten über den restlichen, zwischenliegenden Gehäusewandbereich der Rückseite des Ladegerätgehäuses außerhalb der Befestigungsstützen hinaus und/oder seitlich nach außen über den restlichen, zwischenliegenden Gehäusewandbereich der betreffenden Gehäuseseite hinaus vor. Im gezeigten Beispiel stehen die außenseitigen Befestigungsstützen 19₁, 19₂, 19₃, 19₄ sowohl nach hinten wie auch seitlich nach außen vor. Der Überstand der Befestigungsstützen nach hinten hat zur Folge, dass sich das Ladegerätgehäuse bei rückseitiger Montage an einer Unterlage mit seiner Rückwand nicht vollflächig gegen die Unterlage anlegt, sondern ein Spalt dazwischen verbleibt. Der seitliche Überstand der Befestigungsstützen hat analog zur Folge, dass sich das Ladegerätgehäuse bei seitlicher Montage mit seiner betreffenden Gehäuseseite nicht vollflächig gegen die Unterlage anlegt, sondern ein Spalt dazwischen verbleibt. Außerdem können dadurch in einem Fall, bei dem mehrere gleichartige Ladegeräte mit ihren Gehäusen in einer Reihe oder in einem zweidimensionalen Feld bzw. Array nebeneinander angeordnet werden sollen, diese so platziert werden, dass je zwei benachbarte Ladegerätgehäuse mit ihren einander zugewandten Befestigungsstützen gegeneinander anliegen, während zwischen den einander zugewandten Gehäusewandbereichen außerhalb der Befestigungsstützen ein Spalt verbleibt. Mit anderen Worten können die Befestigungsstützen durch ihren rückseitigen bzw. seitlichen Überstand als Abstandshalter für die Montage des jeweiligen Ladegerätgehäuses an einer Unterlage und/oder als Abstandshalter für die Platzierung mehrerer Ladegerätgehäuse in engem Abstand nebeneinander fungieren.

Wie die gezeigten und die weiteren oben erläuterten Ausführungsbeispiele deutlich machen, stellt die Erfindung ein Ladegerät und ein diesbezügliches Ladegerätgehäuse mit sehr vorteilhafter Konfiguration hinsichtlich Handhabung, Gebrauchsflexibilität, Funktionalität und variablen Befestigungsmöglichkeiten zur Verfügung. Das Ladegerät kann insbesondere zum elektrischen Aufladen von Akkupacks und ähnlichen wiederaufladbaren Batterieeinheiten für handgeführte Garten-und Forstbearbeitungsgeräte sowie andere elektrisch betriebene Handwerkzeuggeräte verwendet werden.

## Patentansprüche

1. Ladegerätgehäuse mit
- einer Bedienseite (1),
- mindestens einem von der Bedienseite (1) her zugänglichen Batterieladeplatz (2) und
- einem gehäuseaußenseitigen ersten Befestigungsbereich (3) an einer von der Bedienseite (1) verschiedenen ersten Befestigungsseite (4), wobei der erste Befestigungsbereich (3) zur lösbaren Befestigung des Ladegerätgehäuses an einer Befestigungsunterlage eingerichtet ist und ein oder mehrere erste Befestigungselemente (5) aufweist,
**gekennzeichnet durch**
- einen gehäuseaußenseitigen zweiten Befestigungsbereich (6) an einer von der Bedienseite (1) und der ersten Befestigungsseite (4) verschiedenen zweiten Befestigungsseite (7), wobei der zweite Befestigungsbereich (6) zur lösbaren Befestigung des Ladegerätgehäuses an einer Befestigungsunterlage eingerichtet ist und ein oder mehrere zweite Befestigungselemente (8) aufweist.

2. Ladegerätgehäuse nach Anspruch 1, weiter **dadurch gekennzeichnet, dass** der erste Befestigungsbereich (3) mehrere separate erste Befestigungszonen (3₁, 3₂, ...) umfasst, die in einer gemeinsamen ersten Befestigungsebene liegen und/oder jeweils mindestens eine erste Schraubbefestigungsöffnung (9) als erstes Befestigungselement (5) aufweisen.

3. Ladegerätgehäuse nach Anspruch 2, weiter **dadurch gekennzeichnet, dass** die erste Befestigungsseite (4) eine polygonale Form besitzt und sich die ersten Befestigungszonen (3₁, 3₂, ...) an Eck- oder Seitenbereichen (4₁, 4₂, ...) der ersten Befestigungsseite (4) befinden.

4. Ladegerätgehäuse nach einem der Ansprüche 1 bis 3, weiter **dadurch gekennzeichnet, dass** der zweite Befestigungsbereich (6) mehrere separate zweite Befestigungszonen (6₁, 6₂, ...) umfasst, die in einer gemeinsamen zweiten Befestigungsebene liegen und/oder jeweils mindestens eine zweite Schraubbefestigungsöffnung (12) als zweites Befestigungselement (8) aufweisen.

5. Ladegerätgehäuse nach Anspruch 4, weiter **dadurch gekennzeichnet, dass** die zweite Befestigungsseite (7) eine polygonale Form besitzt und sich die zweiten Befestigungszonen (6₁, 6₂, ...) an Eck- oder Seitenbereichen (7₁, 7₂, ...) der zweiten Befestigungsseite (7) befinden.

6. Ladegerätgehäuse nach einem der Ansprüche 1 bis 5, weiter **gekennzeichnet durch** außenseitige Befestigungsstützen (19₁, 19₂, 19₃, 19₄), die jeweils an einer ersten Stützenseite (10) das oder die ersten Befestigungselemente (5) und an einer zweiten Stützenseite (11) das oder die zweiten Befestigungselemente (8) aufweisen.

7. Ladegerätgehäuse nach Anspruch 6, weiter **dadurch gekennzeichnet, dass** die jeweilige außenseitige Befestigungsstütze (19₁, 19₂, 19₃, 19₄) einen die erste Stützenseite (10) bildenden Stützenfußbereich (19_{F}) und einen die zweite Stützenseite (11) bildenden Stützenlängsseitenbereich (19_{S}) aufweist.

8. Ladegerätgehäuse nach Anspruch 6 oder 7, weiter **dadurch gekennzeichnet, dass** die jeweilige außenseitige Befestigungsstütze (19₁, 19₂, 19₃, 19₄) an der ersten Stützenseite (10) mindestens zwei voneinander beabstandete erste Befestigungselemente (5₁, 5₂) aufweist und/oder an der zweiten Stützenseite (11) mindestens zwei voneinander beabstandete zweite Befestigungselemente (8₁, 8₂) aufweist.

9. Ladegerätgehäuse nach einem der Ansprüche 1 bis 8, weiter **dadurch gekennzeichnet, dass** es einen Gehäusequader bildet und die Bedienseite (1) von einer Quaderhauptseite (Q_{H1}) oder einer Quaderlängsseite (Q_{L1}) des Gehäusequaders gebildet ist.

10. Ladegerätgehäuse nach Anspruch 9, weiter **dadurch gekennzeichnet, dass** die außenseitigen Befestigungsstützen (19₁, 19₂, 19₃, 19₄) an Quaderseitenkanten (Q_{K1}, Q_{K2}, Q_{K3}, Q_{K4}) und/oder an Quadereckbereichen (Q_{E1}, Q_{E2}, Q_{E3}, Q_{E4}) des Gehäusequaders angeordnet sind.

11. Ladegerät zum elektrischen Laden einer wiederaufladbaren Batterieeinheit, **gekennzeichnet durch** ein Ladegerätgehäuse nach einem der Ansprüche 1 bis 10.
